(19) Europäisches Patentamt European Patent Office Office européen des brevets

(11) **EP 4 489 133 A1**

(12) **EUROPEAN PATENT APPLICATION**
published in accordance with Art. 153(4) EPC

(43) Date of publication:
08.01.2025 Bulletin 2025/02

(21) Application number: 23791605.1

(22) Date of filing: 22.03.2023

(51) International Patent Classification (IPC):
*H01M 4/525* (2010.01)    *C01G 53/00* (2006.01)
*H01M 4/36* (2006.01)     *H01M 4/505* (2010.01)

(52) Cooperative Patent Classification (CPC):
**C01G 53/00; H01M 4/36; H01M 4/505; H01M 4/525;**
Y02E 60/10

(86) International application number:
**PCT/JP2023/011125**

(87) International publication number:
**WO 2023/203952 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 18.04.2022 JP 2022068070

(71) Applicant: **Panasonic Intellectual Property Management Co., Ltd.**
**Kadoma-shi, Osaka 571-0057 (JP)**

(72) Inventors:
• **ASAKA, Keisuke**
  **Kadoma-shi, Osaka 571-0057 (JP)**
• **SUZUKI, Hirotetsu**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE ACTIVE MATERIAL AND NONAQUEOUS ELECTROLYTE SECONDARY BATTERY**

(57)    Provided is a positive electrode active material having low resistance and improved rate characteristics. This positive electrode active material contained in a positive electrode of a nonaqueous electrolyte secondary battery contains a lithium-transition metal composite oxide and a carbonaceous film formed on the surface of the lithium-transition metal composite oxide, wherein the carbonaceous film contains an alkali metal except Li and/or an alkali earth metal.

Figure 1

**Description**

TECHNICAL FIELD

The present disclosure relates to a positive electrode active material and a non-aqueous electrolyte secondary battery.

BACKGROUND ART

In recent years, as a secondary battery having a high output and a high capacity, a non-aqueous electrolyte secondary battery has been widely used, in which the non-aqueous electrolyte secondary battery includes a positive electrode, a negative electrode, and a non-aqueous electrolyte, and performs charging and discharging by moving Li ions and the like between the positive electrode and the negative electrode. As a positive electrode active material contained in the non-aqueous electrolyte secondary battery, a lithium transition metal composite oxide having a layered rock salt structure is generally used, and use of a lithium transition metal composite oxide having a spinel structure, an olivine structure, or the like has also been studied.

For example, Patent Literature 1 discloses a positive electrode active material in which a surface of a lithium transition metal composite oxide having an olivine structure is coated with a carbonaceous film containing S and Li for the purpose of improving electron conductivity.

CITATION LIST

PATENT LITERATURE

PATENT LITERATURE 1: Japanese Unexamined Patent Application Publication No. 2009-140876

SUMMARY

By the way, in a lithium transition metal composite oxide having a layered rock salt structure, studies have been conducted to reduce the content of Co which is a rare metal. However, in the lithium transition metal composite oxide, when the content of Co is lowered, electron conductivity deteriorates, and electric resistance may increase. In addition, in the lithium transition metal composite oxide, when the content of Co is lowered, efficiency in charging and discharging at a high current density may deteriorate. As the technique of Patent Literature 1 is a technique for a lithium transition metal composite oxide having an olivine structure and has not studied a lithium transition metal composite oxide having a layered rock salt structure, there is still room for improvement.

Here, an object of the present disclosure is to provide a positive electrode active material having low resistance and improved rate characteristics.

A positive electrode active material according to an aspect of the present disclosure includes a lithium transition metal composite oxide, and a carbonaceous film formed on a surface of the lithium transition metal composite oxide, in which the carbonaceous film contains at least one of an alkali metal excluding Li and an alkaline earth metal.

A non-aqueous electrolyte secondary battery according to an aspect of the present disclosure includes a positive electrode containing the positive electrode active material, a negative electrode, and a non-aqueous electrolyte.

According to the positive electrode active material according to an aspect of the present disclosure, the rate characteristics can be improved while reducing electrical resistance of the non-aqueous electrolyte secondary battery.

BRIEF DESCRIPTION OF DRAWINGS

FIG. 1 is a longitudinal sectional view of a cylindrical secondary battery as an example of an embodiment.
FIG. 2 is a diagram illustrating a result of TEM-EDX analysis for a positive electrode active material of a first example.
FIG. 3 is a diagram illustrating a result of XPS analysis for positive electrode active materials of the first example and a first comparative example.

DESCRIPTION OF EMBODIMENTS

Conventionally, a lithium transition metal composite oxide containing Co has been used as a positive electrode active material of a non-aqueous electrolyte secondary battery. However, Co is a rare metal, and in recent years, studies have been conducted to reduce the content of Co in the lithium transition metal composite oxide. In the lithium transition metal composite oxide, when the content of Co is lowered, electron conductivity deteriorates, and electric resistance may increase. In addition, in the lithium transition metal composite oxide, when the content of Co is lowered, efficiency in charging and discharging at a high current density may deteriorate.

Therefore, the present inventors have extensively conducted studies for achieving the above-mentioned object, and resultantly found that by using, as a positive electrode active material, a lithium transition metal composite oxide which has a carbonaceous film on a surface thereof, in which the carbonaceous film contains at least one of an alkali metal excluding Li and an alkaline earth metal, rate characteristics can be improved while direct current internal resistance (DCIR) of the non-aqueous electrolyte secondary battery is lowered. It is presumed that inclusion of the alkali metal or the alkaline earth metal having an ionic radius larger than that of Li improves uniformity of the carbonaceous film on the surface of the lithium transition metal composite oxide.

Hereinafter, an example of an embodiment of the non-aqueous electrolyte secondary battery according to the present disclosure will be described in detail. Hereinafter, a cylindrical secondary battery in which a winding-type electrode assembly is housed in a bottomed cylindrical outer can will be shown as an example, but an outer casing is not limited to the cylindrical outer can, and may be, for example, a rectangular outer can, or may be an outer casing formed of a laminate sheet including a metal layer and a resin layer. The electrode assembly may be a stacked electrode assembly obtained by alternately stacking a plurality of positive electrodes and a plurality of negative electrodes with a separator interposed therebetween. In addition, a liquid non-aqueous electrolyte is shown as an example below, but the non-aqueous electrolyte is not limited to a liquid, and may be a solid.

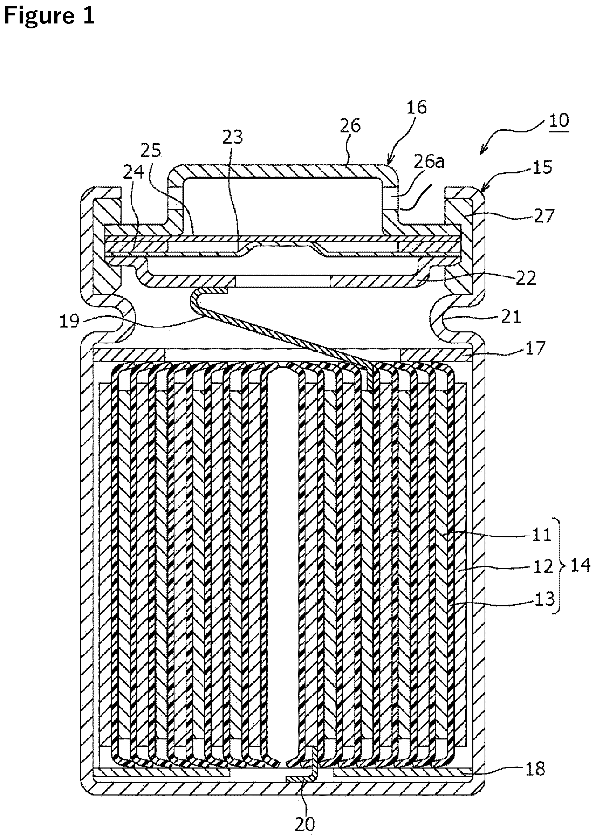

FIG. 1 is a longitudinal sectional view of a cylindrical secondary battery 10 as an example of an embodiment. In the secondary battery 10 shown in FIG. 1, an electrode assembly 14 and a non-aqueous electrolyte (not illustrated) are housed in an outer casing 15. The electrode assembly 14 has a winding-type structure formed by winding a positive electrode 11 and a negative electrode 12 with a separator 13 interposed therebetween. As a solvent (organic solvent) of the non-aqueous electrolyte, it is possible to use carbonates, lactones, ethers, ketones, esters, and the like, and the solvents can be used by mixing two or more types thereof. When two or more types of solvents are used in combination, it is preferable to use a mixed solvent containing a cyclic carbonate and a chain carbonate. For example, ethylene carbonate (EC), propylene carbonate (PC), butylene carbonate (BC), and the like can be used as the cyclic carbonate, and dimethyl carbonate (DMC), ethyl methyl carbonate (EMC), diethyl carbonate (DEC), and the like can be used as the chain carbonate. As an electrolyte salt of the non-aqueous electrolyte, it is possible to use $LiPF_6$, $LiBF_4$, $LiCF_3SO_3$, and the like, and mixtures thereof. The amount of the electrolyte salt dissolved in the solvent can be, for example, greater than or equal to 0.5 mol/L and less than or equal to 2.0 mol/L. In addition, the non-aqueous electrolyte may further contain vinylene carbonate or a propane sultone-based additive. Hereinafter, for convenience of description, a side toward a sealing assembly 16 will be described as "upper", and a side toward a bottom of the outer casing 15 will be described as "lower".

An opening end of the outer casing 15 is closed with the sealing assembly 16, and the inside of the secondary battery 10 is thereby hermetically sealed. Insulating plates 17 and 18 are provided above and below the electrode assembly 14, respectively. A positive electrode lead 19 extends upwards through a through hole in the insulating plate 17, and is welded to a lower surface of a filter 22, which is a bottom plate of the sealing assembly 16. In the secondary battery 10, a cap 26, which is the top plate of the sealing assembly 16 electrically connected to the filter 22, serves as a positive electrode terminal. Meanwhile, a negative electrode lead 20 extends toward the bottom of the outer casing 15 through a through hole in the insulating plate 18, and is welded to an inner surface of the bottom of the outer casing 15. In the secondary battery 10, the outer casing 15 serves as a negative electrode terminal. Note that, when the negative electrode lead 20 is installed at a terminal, the negative electrode lead 20 passes through the outer side of the insulating plate 18, extends toward the bottom of the outer casing 15, and is welded to the inner surface of the bottom of the outer casing 15.

The outer casing 15 is, for example, a bottomed cylindrical metal outer can. A gasket 27 is provided between the outer casing 15 and the sealing assembly 16 to ensure sealability inside the secondary battery 10. The outer casing 15 has a groove portion 21 which is formed by, for example, pressing a side surface of the outer casing 15 from the outside, in which the groove portion 21 supports the sealing assembly 16. The groove portion 21 is preferably formed in an annular shape in a circumferential direction of the outer casing 15, and the sealing assembly 16 is supported by the upper surface of the groove portion 21 with the gasket 27 interposed therebetween.

The sealing assembly 16 includes the filter 22, a lower vent member 23, an insulating member 24, an upper vent member 25, and the cap 26 that are stacked in order from the electrode assembly 14 side. Each of the members forming the sealing assembly 16 has, for example, a disk shape or a ring shape, and the members excluding the insulating member 24 are electrically connected to each other. The lower vent member 23 and the upper vent member 25 are connected to each other at centers thereof, and the insulating member 24 is interposed between circumferences of the vent members. When the internal pressure of the battery increases due to abnormal heat generation, for example, the lower vent member 23 ruptures, which causes the upper vent member 25 to swell toward the cap 26 and move away from the lower vent member 23, and the electrical connection between the two vent members is thereby cut off. When the internal pressure further increases, the upper vent member 25 ruptures, and gas is discharged from an opening 26a of the cap 26.

Hereinafter, the positive electrode 11, the negative electrode 12, the separator 13, and the non-aqueous electrolyte forming the secondary battery 10, in particular, the positive electrode active material contained in the positive electrode 11 will be described in detail.

[Positive Electrode]

The positive electrode 11 includes, for example, a positive electrode current collector and a positive electrode mixture layer formed on the surface of the positive electrode current collector. The positive electrode mixture layer is preferably formed on both surfaces of the positive electrode current collector. As the positive electrode current collector, a foil of a metal such as aluminum or an aluminum alloy which is stable in a potential range of the positive electrode 11, a film in which the metal is disposed on the surface layer thereof, or the like can be used. The positive electrode mixture layer may contain a positive electrode active material, a conductive agent, and a binding agent. The positive electrode 11 can be produced by, for example, applying a positive electrode mixture slurry including the positive electrode active material, the conductive agent, the binding agent, and the like to the surface of the positive electrode current collector, drying a coating film, and then rolling the coating film using a roller or the like.

Examples of the conductive agent contained in the positive electrode mixture layer include carbon materials such as carbon black, acetylene black, Ketjenblack, graphene, carbon nanotube, carbon nanofiber, and graphene. The content of the conductive agent is, for example, greater than or equal to 0.01 mass% and less than or equal to 10 mass%, preferably greater than or equal to 0.1 mass% and less than or equal to 5 mass% with respect to the total mass of the positive electrode mixture layer.

Examples of the binding agent contained in the positive electrode mixture layer include fluorine-containing resins such as polytetrafluoroethylene (PTFE) and polyvinylidene fluoride (PVdF), polyacrylonitrile (PAN), polyimide, an acrylic resin, and polyolefin. In addition, the resins may be used in combination with carboxymethyl cellulose (CMC) or a salt thereof, polyethylene oxide (PEO), or the like. The content of the binding agent is, for example, greater than or equal to 0.1 mass% and less than or equal to 10 mass%, preferably greater than or equal to 0.5 mass% and less than or equal to 5 mass% with respect to the total mass of the positive electrode mixture layer.

The positive electrode active material contained in the positive electrode mixture layer includes a lithium transition metal composite oxide and a carbonaceous film formed on the surface of the lithium transition metal composite oxide, in which the carbonaceous film contains at least one of an alkali metal excluding Li and an alkaline earth metal. Accordingly, it is possible to improve rate characteristics while reducing electrical resistance of the non-aqueous electrolyte secondary battery.

The lithium transition metal composite oxide includes, for example, secondary particles formed by aggregation of primary particles. Here, the surface of the lithium transition metal composite oxide means the surfaces of the secondary particles of the lithium transition metal composite oxide. That is, the carbonaceous film is present on the surfaces of the secondary particles of the lithium transition metal composite oxide. The carbonaceous film may be present in a spotted manner to cover at least a part of the surfaces of the secondary particles of the lithium transition metal composite oxide, or may be present to cover the entire surface of the secondary particles. The carbonaceous film may be present at an interface where the primary particles of the lithium transition metal composite oxide are in contact with each other.

The particle diameter of each of the primary particles forming the secondary particles of the lithium transition metal composite oxide is, for example, greater than or equal to 0.02 $\mu$m and less than or equal to 2 $\mu$m. The particle diameter of each of the primary particles is measured as a diameter of a circumscribed circle in a particle image observed by a scanning electron microscope (SEM). The average particle size of the secondary particles of the lithium transition metal composite oxide is, for example, greater than or equal to 2 $\mu$m and less than or equal to 30 $\mu$m. Here, the average particle diameter means a volume-based median diameter (D50). D50 means a particle diameter in which the cumulative frequency in a volume-based particle size distribution is 50% from the smallest particle size, and is also referred to as a median diameter. The particle size distribution of the secondary particles of the lithium transition metal composite oxide can be measured using a laser diffraction type particle size distribution measuring apparatus (for example, MT3000II manufactured by MicrotracBEL Corp.) using water as a dispersion medium.

The lithium transition metal composite oxide has, for example, a layered rock salt structure belonging to a space group R-3m, a space group C2/m, and the like. From the viewpoint of higher capacity, stability of a crystal structure, and the like, the lithium transition metal composite oxide preferably has a layered rock salt structure belonging to the space group R-3m. The layered rock salt structure of the lithium transition metal composite oxide may include a transition metal layer, a Li layer, and an oxygen layer. As Li ions present in the Li layer reversibly enter and exit, a charging-and-discharging reaction of the battery proceeds.

The content of Co in the lithium transition metal composite oxide is preferably less than or equal to 5 mol%, more preferably less than or equal to 2 mol%, still more preferably less than or equal to 1 mol%, and particularly preferably 0.1 mol% with respect to the total number of moles of metal elements excluding Li. Since Co is a rare metal and is expensive, it is preferable to reduce the usage amount of Co.

The lithium transition metal composite oxide may be represented by a general formula $Li_aNi_{1-x-y}Mn_xM_yO_{2+b}$. Note that the general formula satisfies $0.9 \leq a \leq 1.1$, $0 \leq x \leq 0.5$, $0 \leq y \leq 0.1$, $0.5 \leq 1-x-y \leq 0.95$, and $-0.05 \leq b \leq 0.05$, and the element M is an element other than Li, Ni, Mn, and oxygen. Note that a value of "a" that indicates the molar ratio of lithium is increased or reduced by charging and discharging. The element M is preferably at least one type selected from the group consisting of Co, Nb, Al, Zr, B, Fe, Cu, Zn, Sn, W, Mo, Si, Ti, Fe, and Cr from the viewpoint of, for example, stability of the crystal structure of the lithium transition metal composite oxide.

The content of the elements constituting the lithium transition metal composite oxide can be measured by an inductively coupled plasma atomic emission spectroscopy (ICP-AES), an electron probe microanalyzer (EPMA), or the like.

As described above, the carbonaceous film preferably contains at least one of the alkali metal excluding Li and the alkaline earth metal, and contains at least one of Na and K. The carbonaceous film may further contain S. Note that the carbonaceous film may contain Li. The presence of S in the carbonaceous film can be confirmed by energy dispersive X-ray spectroscopy (TEM-EDX). The presence of alkali metals such as Na and K and alkaline earth metals in the carbonaceous film can be confirmed by X-ray photoelectron spectroscopy (XPS).

A thickness of the carbonaceous film is, for example, less than or equal to 30 nm. A lower limit value of the thickness of the carbonaceous film is, for example, 1 nm. The thickness of the carbonaceous film is measured by an image of a cross section of the positive electrode active material observed by a transmission electron microscope (TEM).

The positive electrode mixture layer may contain other positive electrode active materials in addition to the above-described positive electrode active materials. Examples of other positive electrode active materials include a lithium transition metal composite oxide having no carbonaceous film on the surface thereof. The above-described positive electrode active material is preferably greater than or equal to 90 mass%, and is preferably greater than or equal to 99 mass% with respect to the total mass of the positive electrode active material.

Next, an example of a method of producing the positive electrode active material containing the lithium transition metal composite oxide and the carbonaceous film will be described.

The positive electrode active material is produced, for example, as follows.

(1) An anionic surfactant is dissolved in water to produce an aqueous solution.
(2) A powder of a lithium transition metal composite oxide is added to the aqueous solution and stirred to adjust a suspension in which the lithium transition metal composite oxide is dispersed in the aqueous solution.
(3) A residue obtained by filtering the suspension is fired to obtain a positive electrode active material.

The anionic surfactant is adsorbed on the surface of the lithium transition metal composite oxide in water, and a substantially uniform carbonaceous film can be produced. The surfactant is not particularly limited as long as the surfactant contains C and at least one of an alkali metal excluding Li and an alkaline earth metal. The surfactant preferably contains at least one of Na and K. The surfactant may further contain S. Examples of the surfactant include sodium lauryl sulfate and potassium lauryl sulfate. The concentration of the surfactant in the aqueous solution is, for example, greater than or equal to 0.1 mass% and less than or equal to 10 mass%.

[Negative Electrode]

The negative electrode 12 includes, for example, a negative electrode current collector and a negative electrode mixture layer formed on the surface of the negative electrode current collector. The negative electrode mixture layer is preferably formed on both surfaces of the negative electrode current collector. As the negative electrode current collector, a foil of a metal such as copper or a copper alloy which is stable in a potential range of the negative electrode 12, a film in which the metal is disposed on the surface layer thereof, or the like can be used. The negative electrode mixture layer may contain a negative electrode active material and a binding agent. The negative electrode 12 can be produced by, for example, applying a negative electrode mixture slurry including the negative electrode active material, the binding agent, and the like to the surface of the negative electrode current collector, drying a coating film, and then rolling the coating film using a roller or the like.

The negative electrode active material contained in the negative electrode mixture layer is not particularly limited as long as the negative electrode active material can reversibly occlude and discharge lithium ions, and a carbon material such as graphite is generally used. As the graphite, any of natural graphites such as scale-like graphite, massive graphite, and earthy graphite and artificial graphites such as massive artificial graphite and graphitized mesophase carbon microbeads may be used. Further, as the negative electrode active material, a metal alloyed with Li such as Si or Sn, a metal compound containing Si or Sn, a lithium titanium composite oxide, or the like may be used. For example, a Si-containing compound represented by $SiO_x$ ($0.5 \leq x \leq 1.6$), a Si-containing compound in which Si fine particles are dispersed in a lithium silicate phase represented by $Li_{2y}SiO_{(2+y)}$ ($0 < y < 2$), or the like may be used in combination with graphite.

Examples of the binding agent contained in the negative electrode mixture layer include styrene butadiene rubber (SBR), nitrile-butadiene rubber (NBR), carboxymethyl cellulose (CMC) or a salt thereof (CMC-Na, CMC-K, CMC-$NH_4$, and the like, or partially neutralized salts may be used), polyacrylic acid (PAA) or a salt thereof (PAA-Na, PAA-K, and the like, and partially neutralized salts may be used), and polyvinyl alcohol (PVA). The resins may be used alone or in combination of two or more kinds thereof. The content of the binding agent is, for example, greater than or equal to 0.1 parts by mass and less than or equal to 10 parts by mass, preferably greater than or equal to 0.5 parts by mass and less than or equal to 5 parts by mass, with respect to 100 parts by mass of the negative electrode active material. Additionally, a conductive agent such as carbon black, acetylene black, or Ketjenblack may be added to the negative electrode mixture layer.

[Separator]

As the separator 13, for example, a porous sheet having an ion permeation property and an insulation property is used. Specific examples of the porous sheet include a microporous thin film, a woven fabric, and a nonwoven fabric. As a material of the separator, polyolefin such as polyethylene and polypropylene, cellulose, and the like are suitable. The separator 13 may be a laminate including a cellulose fiber layer and a thermoplastic resin fiber layer such as an olefin-based resin. Further, the separator 13 may be a multi-layer separator including a polyethylene layer and a polypropylene layer, and a separator obtained by applying a material such as an aramid-based resin or ceramic to the surface of the separator 13 may be used.

EXAMPLES

Hereinafter, the present disclosure will be further described with reference to examples and comparative examples, but the present disclosure is not limited to the following examples.

[Production of Positive Electrode Active Material]

<Example 1>

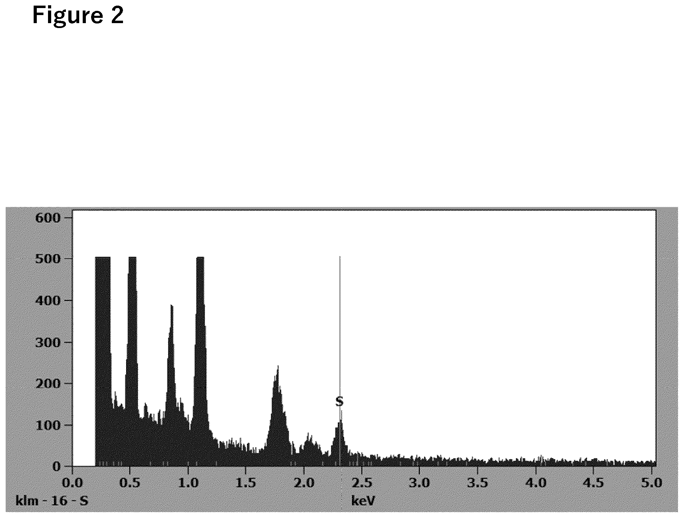

Sodium lauryl sulfate as a surfactant was dissolved in water to produce an aqueous solution of 1 mass%. A lithium transition metal composite oxide having a median diameter (D50) of 17 $\mu$m and a composition of $LiNi_{0.8}Mn_{0.2}O_2$ was added to the aqueous solution, and the mixture thereof was stirred for 60 minutes to adjust a suspension having a concentration of 1000 g/L. A residue obtained by filtering the suspension was vacuum-dried at 80°C for 10 hours and then fired at 600°C for 5 hours, thereby obtaining a positive electrode active material of the first example. As a result of observation by a transmission electron microscope (TEM), a thickness of a carbonaceous film was 10 nm. As illustrated in FIG. 2, as a result of observation by energy dispersive X-ray spectroscopy (TEM-EDX), a peak attributed to S was observed in the vicinity of 2.2 keV, and the presence of S in the carbonaceous film was confirmed.

[Production of Positive Electrode]

100 parts by mass of the positive electrode active material, 1.1 parts by mass of acetylene black as a conductive agent, and 0.9 parts by mass of polyvinylidene fluoride as a binding agent were mixed, and the mixture thereof was mixed with N-methyl-2 pyrrolidone (NMP) to prepare a positive electrode mixture slurry. Subsequently, the positive electrode mixture slurry was applied to one surface of a positive electrode current collector made of an aluminum foil having a thickness of 15 $\mu$m, a coating film was dried, the coating film was rolled by a rolling roller, and then the coating film was cut into a predetermined electrode size to produce a positive electrode for evaluation. The positive electrode was provided with a region to function as a positive electrode of 20 mm $\times$ 20 mm and a connection region with a lead of 5 mm $\times$ 5 mm. Thereafter, the positive electrode mixture layer formed on the connection region was further scraped off to expose the positive electrode current collector. Thereafter, an exposed portion of the positive electrode current collector was connected to a positive electrode lead, and a predetermined region on the outer periphery of the positive electrode lead was covered with an insulating film.

[Production of Negative Electrode]

A negative electrode was produced by bonding a lithium metal foil (thickness: 300 $\mu$m) to one surface of an electrolytic copper foil serving as a negative electrode current collector. Thereafter, the negative electrode was cut into a shape similar to the shape of the positive electrode, thereby obtaining a negative electrode for evaluation. The lithium metal foil formed on the connection region formed was peeled off similarly to the positive electrode to expose the negative electrode current collector. Thereafter, similarly to the positive electrode, an exposed portion of the negative electrode current collector was connected to a negative electrode lead, and a predetermined region on the outer periphery of the negative electrode lead was covered with an insulating film.

[Production of Non-Aqueous Electrolyte]

Ethylene carbonate (EC), ethyl methyl carbonate (EMC), and dimethyl carbonate (DMC) were mixed at a volume ratio of 20 : 5 : 75. Lithium hexafluorophosphate ($LiPF_6$) was dissolved in the mixed solvent to have a concentration of 1.3 mol/liter, thereby preparing a non-aqueous electrolyte (non-aqueous electrolytic solution).

[Production of Battery for Evaluation]

A battery for evaluation was produced using a positive electrode and a negative electrode for evaluation. First, the positive electrode and the negative electrode were disposed to face each other with a separator interposed therebetween so that a positive electrode mixture layer and a negative electrode mixture layer overlap each other, thereby obtaining an electrode plate group. Next, an Al laminate film (thickness: 100 μm) cut into a rectangular shape of $60 \times 90$ mm was folded in half, and an end on a long side of 60 mm was thermally sealed at 230°C, thereby forming a cylindrical shape of $60 \times 45$ mm. Thereafter, the produced electrode plate group was placed in the cylinder, and the positions of the end surface of the Al laminate film and the insulating film of each lead were aligned with each other and thermally sealed at 230°C. Next, 0.3 cm3 of a non-aqueous electrolytic solution was injected from the short side of the Al laminate film which was not thermally sealed, and after the injection, the Al laminate film was caused to stand still for 5 minutes under a reduced pressure of 0.06 MPa, and each mixture layer was impregnated with the electrolytic solution. Finally, the end surface of the Al laminate film on the injected side was thermally sealed at 230°C to produce a battery A1 for evaluation. A cell for evaluation was produced under a dry environment with a dew point less than or equal to -50°C.

[Evaluation of Rate Characteristics]

Under a temperature environment of 25°C, the battery was charged at a constant current of 0.2 C to 4.5 V, and then charged at a constant voltage of 4.5 V to 0.05 C. Thereafter, constant current discharging was performed at a constant current of 0.2 C until the cell voltage reached 2.5 V, and a discharge capacity C1 at 0.2 C was measured. Next, constant current charging was performed at 0.2 C until the cell voltage reached 4.5 V, and then constant voltage charging was performed at 4.2 V until 0.05 C is reached.
Thereafter, constant current discharging was performed at a constant current of 3 C until the cell voltage reached 2.5 V, and a discharge capacity C2 at 3 C was measured. The rate characteristics were calculated from the following formula.

$$\text{Rate characteristic} = \text{C2/C1}$$

[Evaluation of Direct Current Internal Resistance (DCIR)]

The battery after the initial charging and discharging test was subjected to constant current charging at 0.2 C in a temperature environment of 25°C until the state of charge (SOC) reached 50%. Thereafter, the battery was rested for 2 hours, and a resistance value was calculated from the voltage drop before and after discharging at a current of 0.3 C for 30 seconds, and defined as DCIR.

<Example 2>

A positive electrode active material was obtained similarly to the first example except that the addition amount of sodium lauryl sulfate was changed to 5 mass% in the production of the positive electrode active material.

<Comparative Example 1>

A positive electrode active material was obtained similarly to the first example except that sodium lauryl sulfate was not added in the production of the positive electrode active material.

<Comparative Example 2>

A positive electrode active material was obtained similarly to the first example except that lithium lauryl sulfate was used instead of sodium lauryl sulfate in the production of the positive electrode active material.

<Comparative Example 3>

A positive electrode active material was obtained similarly to the first example except that lithium lauryl sulfate was used instead of sodium lauryl sulfate and the addition amount was changed to 5 mass% in the production of the positive electrode active material.

Rate characteristics and DCIR evaluation results of the batteries of the examples and the comparative examples are shown in Table 1. In Table 1, the rate characteristics and the DCIR of the batteries of the first and second examples and the second and third comparative examples are shown as relative values when the rate characteristics and the DCIR of the battery of the first comparative example are set to 100. Table 1 also shows the type of surfactant and the aqueous solution concentration.

[Table 1]

| | Surfactant | | Rate characteristic [index] | DCIR [index] |
|---|---|---|---|---|
| | Type | Aqueous solution concentration [mass%] | | |
| Example 1 | Sodium lauryl sulfate | 1 | 118 | 81 |
| Example 2 | Sodium lauryl sulfate | 5 | 146 | 87 |
| Comparative Example 1 | - | - | 100 | 100 |
| Comparative Example 2 | Lithium lauryl sulfate | 1 | 104 | 89 |
| Comparative Example 3 | Lithium lauryl sulfate | 5 | 103 | 96 |

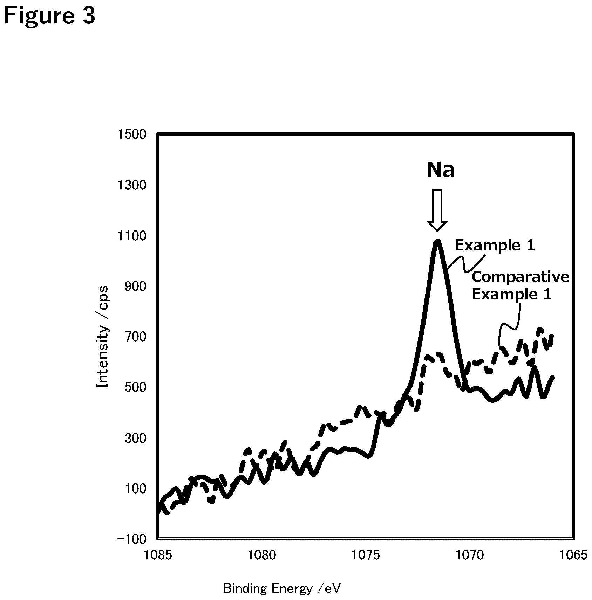

The batteries of the examples had higher rate characteristics and lower DCIR than those of the batteries of the comparative examples. Therefore, it was found that in a lithium transition metal composite oxide having a carbonaceous film formed on the surface thereof, when the carbonaceous film contains at least one of an alkali metal excluding Li and an alkaline earth metal, the rate characteristics can be improved while reducing the electric resistance of the battery. Further, FIG. 3 shows XPS results of the carbonaceous films of the first example and the first comparative example. FIG. 3 shows that Na is present in the carbonaceous film of the first example.

The present disclosure is further described by the following embodiments.

Configuration 1:

A positive electrode active material including a lithium transition metal composite oxide, and a carbonaceous film formed on a surface of the lithium transition metal composite oxide,
in which the carbonaceous film contains at least one of an alkali metal excluding Li and an alkaline earth metal.

Configuration 2:

The positive electrode active material according to configuration 1, in which the carbonaceous film further contains S.

Configuration 3:

The positive electrode active material according to the configuration 1 or 2, in which the carbonaceous film contains at least one of Na and K.

Configuration 4:

The positive electrode active material according to any one of configurations 1 to 3, in which a content of Co in the lithium transition metal composite oxide is less than or equal to 5 mol% with respect to a total number of moles of metal elements excluding Li.

Configuration 5:

The positive electrode active material according to any one of configurations 1 to 4, in which the lithium transition metal composite oxide is represented by a general formula $Li_aNi_{1-x-y}Mn_xM_yO_{2+b}$ (where $0.9 \leq a \leq 1.1$, $0 \leq x \leq 0.5$, $0 \leq y \leq 0.1$, $0.5 \leq 1-x-y \leq 0.95$, and $-0.05 \leq b \leq 0.05$ are satisfied, and the element M is an element other than Li, Ni, Mn, and oxygen).

Configuration 6:

The positive electrode active material according to any one of configurations 1 to 5, in which a thickness of the carbonaceous film is less than or equal to 30 nm.

Configuration 7:

A non-aqueous electrolyte secondary battery including a positive electrode containing the positive electrode active material according to any one of configurations 1 to 6, a negative electrode, and a non-aqueous electrolyte.

REFERENCE SIGNS LIST

10      SECONDARY BATTERY

11          POSITIVE ELECTRODE
12          NEGATIVE ELECTRODE
13          SEPARATOR
14          ELECTRODE ASSEMBLY
15          OUTER CASING
16          SEALING ASSEMBLY
17, 18    INSULATING PLATE
19          POSITIVE ELECTRODE LEAD
20          NEGATIVE ELECTRODE LEAD
21          GROOVE PORTION
22          FILTER
23          LOWER VENT MEMBER
24          INSULATING MEMBER
25          UPPER VENT MEMBER
26          CAP
26a        OPENING
27          GASKET

**Claims**

1.  A positive electrode active material comprising a lithium transition metal composite oxide, and a carbonaceous film formed on a surface of the lithium transition metal composite oxide,
    wherein the carbonaceous film contains at least one of an alkali metal excluding Li and an alkaline earth metal.

2.  The positive electrode active material according to claim 1, wherein the carbonaceous film further contains S.

3.  The positive electrode active material according to claim 1, wherein the carbonaceous film contains at least one of Na and K.

4.  The positive electrode active material according to claim 1, wherein a content of Co in the lithium transition metal composite oxide is less than or equal to 5 mol% with respect to a total number of moles of metal elements excluding Li.

5.  The positive electrode active material according to claim 1, wherein the lithium transition metal composite oxide is represented by a general formula $Li_aNi_{1-xy}Mn_xM_yO_{2+b}$ (where $0.9 \leq a \leq 1.1$, $0 \leq x \leq 0.5$, $0 \leq y \leq 0.1$, $0.5 \leq 1-x-y \leq 0.95$, and $-0.05 \leq b \leq 0.05$ are satisfied, and the element M is an element other than Li, Ni, Mn, and oxygen).

6. The positive electrode active material according to claim 1, wherein a thickness of the carbonaceous film is less than or equal to 30 nm.

7. A non-aqueous electrolyte secondary battery comprising a positive electrode containing the positive electrode active material according to any one of claims 1 to 6, a negative electrode, and a non-aqueous electrolyte.

# Figure 1

# Figure 2

# Figure 3

## INTERNATIONAL SEARCH REPORT

| International application No. |
|---|
| **PCT/JP2023/011125** |

| A. | CLASSIFICATION OF SUBJECT MATTER |
|---|---|

*H01M 4/525*(2010.01)i; *C01G 53/00*(2006.01)i; *H01M 4/36*(2006.01)i; *H01M 4/505*(2010.01)i
FI:  H01M4/525; H01M4/36 C; H01M4/505; C01G53/00 A

According to International Patent Classification (IPC) or to both national classification and IPC

| B. | FIELDS SEARCHED |
|---|---|

Minimum documentation searched (classification system followed by classification symbols)

H01M4/525; C01G53/00; H01M4/36; H01M4/505

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2009-140876 A (SUMITOMO OSAKA CEMENT CO., LTD.) 25 June 2009 (2009-06-25) paragraphs [0026], [0027], [0029], [0033], [0062], [0071], [0073] | 1-2, 4, 6-7 |
| Y | | 5 |
| A | | 3 |
| Y | WO 2022/011939 A1 (SVOLT ENERGY TECHNOLOGY CO., LTD.) 20 January 2022 (2022-01-20) claim 1, description, p. 1, lines 10-14 | 5 |
| A | JP 2011-238594 A (NIPPON ELECTRIC GLASS CO., LTD.) 24 November 2011 (2011-11-24) | 1-7 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 June 2023** | **20 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2023/011125** |

| Patent document cited in search report | | | Publication date (day/month/year) | Patent family member(s) | | | Publication date (day/month/year) |
| --- | --- | --- | --- | --- | --- | --- | --- |
| JP | 2009-140876 | A | 25 June 2009 | US 2010/0261063 A1 paragraphs [0043]-[0045], [0049], [0062], [0118], [0119], [0139], [0143], [0144] | | | |
| | | | | US 2014/0106224 A1 | | | |
| | | | | WO 2009/075289 A1 | | | |
| WO | 2022/011939 | A1 | 20 January 2022 | JP 2022-553657 A | | | |
| | | | | US 2023/0025787 A1 claim 1, paragraph [0003] | | | |
| | | | | EP 4024520 A1 | | | |
| | | | | KR 10-2022-0103763 A | | | |
| JP | 2011-238594 | A | 24 November 2011 | WO 2011/129224 A1 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009140876 A